# EUROPEAN PATENT SPECIFICATION

(11) **EP 4 251 502 B1**
(45) Date of publication and mention of the grant of the patent: **27.11.2024**
(21) Application number: 21831371.6
(22) Date of filing: 27.11.2021
(51) Int. Cl.: B62J 99/00, B62K 11/00, B62K 19/48, B62K 19/30

(54) **SMART VEHICLE**
INTELLIGENTES FAHRZEUG
VÉHICULE INTELLIGENT

(30) Priority: 29.11.2020 IN 202041052015
(43) Date of publication of application: 04.10.2023
(73) Proprietor: TVS Motor Company Limited, 600006 Chennai (IN)
(72) Inventor: RAHUL, Nandagavi, Chennai, 600 006 (IN); LOHIT, Vishwanath Patil, Chennai, 600 006 (IN); MUHAMMED ALTAF, Makandar, Chennai, 600 006 (IN); M, Amardeep Kumar, Chennai, 600 006 (IN); RENGARAJAN, Babu, Chennai, 600 006 (IN)
(74) Representative: Patentanwaltskanzlei Matschnig & Forsthuber OG
(86) International application number: PCT/IN2021/051110
(87) International publication number: WO 2022/113115

(56) References cited:
- EP-A1- 3 127 739
- WO-A1-2011/150366
- WO-A1-2020/183571
- WO-A1-2022/018740

## Description

### TECHNICAL FIELD

The present subject matter relates to a smart vehicle with multiple control units. More particularly, locations and mountings of the control units in the smart vehicle are disclosed.

### BACKGROUND

With evolution in automotive technology, vehicles are turning to become smart vehicles equipped with multiple control units. A smart vehicle, may be a two wheeled vehicle or a three wheeled vehicle comprising multiple control units controlling multiple actuators in the vehicle, such as, the actuators of the engine management system, battery charging system, infotainment system, etc. Accommodating all the control units without increasing external dimensions of the vehicle imposes constraints on mounting and location of the control units on a frame structure of the smart vehicle.

Document WO 2020/183571 discloses a smart vehicle comprising a front panel, a rear panel proximal to a seat of the vehicle, a storage enclosure for accommodating one energy storage device; the storage enclosure being disposed in a space between the front panel and the rear panel; the control unit is positioned in the space. between the front panel and the rear panel.

The above inconveniences can be overcome with the features of claims 1 and/or 15.

### BRIEF DESCRIPTION OF THE DRAWINGS

Fig. **1** exemplarily illustrates an embodiment of a conventional vehicle;
Fig. **2** exemplarily illustrates a front view of a front panel of a smart vehicle;
Fig. **3** exemplarily illustrates a front perspective view of a rear panel of the smart vehicle;
Fig. **4** exemplarily illustrates a left side view of the rear panel of the smart vehicle;
Fig. **5** exemplarily illustrates a front perspective view of an assembly of the storage enclosure and the control units;
Figs. **6A-6B** exemplarily illustrate a right-side perspective view and a plan view of the assembly of the storage enclosure and the control units;
Fig. **7** exemplarily illustrates a left side perspective view of the assembly of the storage enclosure and the control units; and
Fig. **8** exemplarily illustrates a perspective view of the assembly of the storage enclosure and the control units with routing of the wiring harness.

### DETAILED DESCRIPTION OF THE INVENTION

A smart vehicle comprises control units for individual systems, such as, the engine management system (EMS) including a fuel injection (FI) system, an air intake system, an ignition system, an exhaust system, and a fuel system, an engine starting system, a battery charging system, a brake system, a telematics system, a transmission system, etc. Each of these control units are mounted on the frame structure at different locations in the vehicle. The control units receive power supply from an energy storage device and the control units are connected to the components of the respective system using wiring harness. The control units are mounted on the frame of the vehicle. Thus, the layout of the wiring harness, the control units, and the connections between the components is crucial for the operation of the smart vehicle.

In a conventional vehicle, the control unit of the EMS is mounted on one lateral side of the frame of the vehicle. In such vehicles, the battery may be located along the longitudinal centre of the vehicle or mounted on the frame on a side laterally opposite to the control unit of the vehicle. Another controller in the vehicle such as, a control unit of the starter system, for example, the ISG controller is positioned either to left or right side of the battery. The EMS control unit controls the operation of the ISG controller and thus is connected to the ISG controller using plurality of wires that constitute the wiring harness of the vehicle. However, mounting of the EMS-ECU on one side of the battery and mounting of the ISG controller on the other side increases the length of the wiring harness connecting the EMS-ECU and the ISG controller, resulting in voltage drop across the wiring harness. Also, other electrical and electronic components of other sub-systems of the vehicles and other controls units are positioned between the EMS control unit and the ISG controller resulting in cumbersome routing of the wiring harness connecting the EMS-ECU and the ISG controller. Further, these intermediate electrical and electronic components can induce EMI (Electro Magnetic Interference) noise into control signals generated by the EMS-ECU and the ISG controller, hampering the normal functioning of these control units critical to the operation of the vehicle.

In another embodiment of a smart vehicle, the EMS-ECU and the ISG controller may be disposed in a rear side of the engine and accommodated in a space below a seat of the vehicle or in a space formed between the engine and the seat when seen from a side of the vehicle. Since the EMS-ECU and the ISG controller are located in the rear of the vehicle and in a space below the seat, the accessibility to service, maintain, and replace the EMS-ECU and the ISG controller is hindered and the utility space in the vehicle to store other articles is compromised. Even if the control units are positioned in close proximity to reduce the length of the wiring harness, the problem with the EMI affecting the functioning of the control units persists and needs to be addressed.

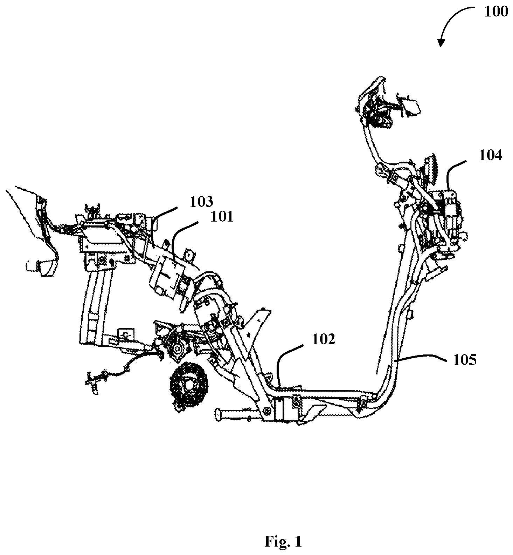

Another embodiment of a conventional vehicle 100 as shown in Fig. 1 comprises a vehicle EMS-ECU 101 located in a rear side of the vehicle, on a right side of the frame 102, below a seat rail 103. The EMS-ECU 101 is positioned above muffler when seen from a right-hand side of the vehicle. As shown, the battery 104 is positioned in the front of the vehicle 100. The length of the wiring harness 105 between the battery 104 and the control unit, such as, the EMS-ECU 101 is considerably long resulting in voltage drop along the wiring 105, leading to draining of the battery 104 and also potentially leading to improper control of the sub-systems controlled by the EMS-ECU 101.

Since the EMS-ECU 101 is positioned in a bottom portion of the seat rail 103, accessibility of the EMS-ECU 101 is substantially poor, as it is difficult to access the EMS-ECU 101 that is attached to the frame 102 and enclosed completely by the body panels. Any repair and maintenance of the EMS-ECU 101 requires disassembly and assembly of the body panels, which results in cumbersome maintenance of the control units of the vehicle. Also, during continuous functioning of these control units, heat is dissipated that needs to be extracted effectively. For enabling prolonged use of the control units, cooling of the internal components of the controls units is provided. Additionally, surface cooling of the control units reduces the temperature of the control units and the other electronic components within it at a faster pace. Also, in such smart vehicles, there is a need for controllers that can perform control operations on more than one component, to reduce the number of control units in the vehicle. However, this need comes with a condition that the multiple components being controlled by one control unit are preferred to be in close proximity to the control unit, to reduce the wiring length and also the associated cost of the wiring length, while also aiding in serviceability and maintainability.

Therefore, there exists a need of an improved layout design for mounting numerous control units in a smart vehicle, without increasing the dimensions of the vehicle, aiding in assembly, serviceability and maintainability of the controls units mounted onto the frame of the vehicle, preventing interferences in functioning of the control units and reducing wiring harness length, overcoming all problems disclosed above as well as other problems of known art.

In an embodiment, a smart vehicle is disclosed comprising a front panel, a rear panel proximal to a seat of the smart vehicle, and a storage enclosure for accommodating at least one energy storage device. The storage enclosure is disposed in a space between the front panel and the rear panel. At least one control unit is positioned in the space between the front panel and the rear panel. The at least one control unit is mounted to the rear panel. A head pipe of the smart vehicle is enclosed in a space between the front panel and the rear panel. The storage enclosure is positioned in front of the head pipe.

In an embodiment, the at least one control unit comprises a first control unit and a second control unit. The first control unit is mounted to the storage enclosure and the second control unit is mounted to an inner surface of the rear panel. The second control unit is disposed substantially rearward and leftward of the storage enclosure and the storage enclosure is disposed substantially laterally centrally along a vehicle longitudinal direction. In an embodiment, the first control unit and the second control unit are disposed along one of a left side and a right side of the storage enclosure in vehicle width-wise direction.

The smart vehicle further comprises a headlamp assembly disposed on the front panel substantially forwardly to the storage enclosure. In an embodiment, the headlamp assembly includes one or more LED light sources. The one or more LED light sources are capable of receiving constant supply of current from one of the first control unit and the second control unit.

In an embodiment, the first control unit is an EMS-ECU and the second control unit is an ISG controller. The second control unit is connected to an ISG unit by means of a plurality of high voltage wiring harness. The high voltage wiring harness being routed behind and underneath the storage enclosure towards one of the right side and the left side of the vehicle along the frame of the vehicle to the rear side of the vehicle. In an embodiment, the ISG unit is disposed on one of same side as the second control unit and on an opposite side to the second control unit. In an embodiment, the first control unit is oriented with a large surface area being substantially facing one of a left side and a right side of the vehicle.

In an embodiment, the at least one control unit comprises a mounting enclosure for mounting the at least one control unit to the storage enclosure and the rear panel. The mounting enclosure forms an external cover of the control units. In another embodiment, the mounting enclosure is integrated to the storage enclosure or with the rear panel. The at least one mounting enclosure may be grounded. The at least one mounting enclosure has plurality of cooling fins for cooling of internal components of the at least one control unit.

In an embodiment, the smart vehicle comprises a front panel which includes one or more air vents disposed in a width-wise direction facing front side of the vehicle for allowing passage of atmospheric air for cooling of the at least one control unit. The vehicle further comprises a power unit disposed substantially towards a rear side of the smart vehicle. Further, a utility box is disposed substantially above the power unit.

In an embodiment, the front panel includes one or more sub-panels and the one or more sub-panels are detached for accessing the storage enclosure and/or the at least one control unit. The storage enclosure comprises provisions for mounting at least one relay unit and at least one protection device on at least one side of the storage enclosure.

Another embodiment of a smart vehicle is disclosed. The smart vehicle comprises a head pipe, a storage enclosure capable of accommodating at least one energy storage device, and a vehicle body panel comprising a front panel and a rear panel. The storage enclosure is disposed in front of the head pipe. The storage enclosure is disposed between the front panel and the rear panel, and an integrated starter generator (ISG) controller is mounted to the rear panel.

The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

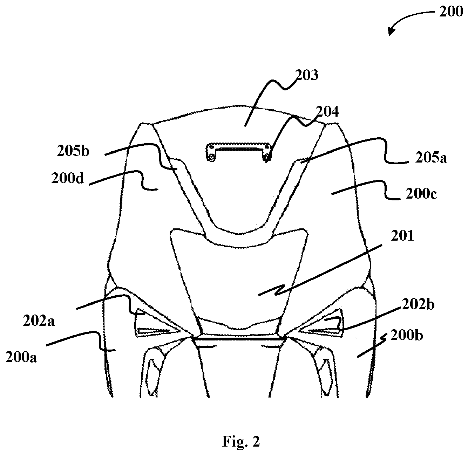

Fig. 2 exemplarily illustrates a front view of a front panel 200 of a smart vehicle. The smart vehicle is, but not limited to, a two-wheeled saddle type vehicle. The smart vehicle may be a straddle type vehicle, an electric vehicle, a hybrid electric vehicle, a motorcycle, a three wheeled vehicle, etc. The smart vehicle has a head pipe (not shown), that is covered by the front panel 200 and a rear panel (not shown). The front panel 200 faces the front of the smart vehicle away from the rider, while the rear panel faces the rider of the vehicle and may act as a leg shield for the rider of the vehicle. The front panel 200 houses the headlamp assembly 201, turn signal indicators 202a, 202b, a visor 203, and means 204 for mounting a registration plate of the vehicle. The front panel 200 at least partially covers the front suspension of the vehicle. The headlamp assembly 201 may comprise a high beam lamp and/or a low beam lamp. The light colour may be white, selective yellow, or any colour of choice of the rider. The lamps or the light sources of the headlamp assembly 201 may be tungsten lamps, halogen lamps, LEDs. The headlamp assembly 201 draws power from an energy storage device in the vehicle via a wiring harness. The LEDs of the headlamp assembly 201 receive regulated power supply from the energy storage device via one or more LED drivers. The LED drivers may be housed in the front panel 200 or the rear panel of the vehicle in close proximity to the headlamp assembly 201. The LED drivers constitute a control unit that controls dimming and direction of the headlamp assembly 201. The smart vehicle further comprises multiple control units, each control unit for each of the systems of the vehicle.

The other control units are for systems, such as, the engine management system (EMS), an engine starting system, a battery charging system, a brake system, a telematics system, a transmission system, etc. The control unit for the EMS, that is, the EMS-ECU controls the fuel injection (FI) system, the air intake system, the ignition system, the exhaust system, and the fuel system of the vehicle. The control unit for the engine starting system may be an integrated starter generator (ISG) controller that controls the operation of an integration starter generator (ISG) unit of the vehicle. The ISG controller controls the charging of the energy storage device, such as, a battery by the ISG unit of the vehicle. The vehicle further comprises a power unit, an IC engine, disposed substantially towards a rear side of the vehicle. The ISG unit aids in quick and efficient cranking of the engine. The vehicle further comprises a utility box disposed substantially above the power unit.

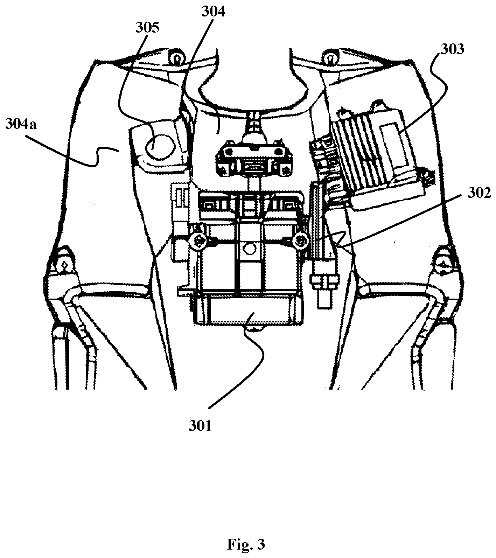

The energy storage device is disposed in the space between the front panel 200 and the rear panel as shown in Fig. 3. The control units draw power from the energy storage device and thus may be disposed in proximity to the energy storage device in the space between the front panel 200 and the rear panel, as shown in Fig. 3. Further, in the front panel 200 of the smart vehicle, one or more air vents 205a, 205b are disposed in a width-wise direction facing frontwards of the vehicle for allowing passage of atmospheric air towards the space between the front panel 200 and the rear panel. The vents 205a, 205b aid in passage of air around the control units and the energy storage device and thereby cooling them. In an embodiment, the front panel 200 comprises one or more sub-panels 200a, 200b, 200c, and 200d. One or more sub-panels 200a, 200b, 200c, 200d are detached for accessing the energy storage device and the control units.

Fig. 3 exemplarily illustrates a front perspective view of the rear panel 304 along with few other systems disposed thereat on the smart vehicle. As illustrated, the rear panel 304 has provisions for removably attaching to the front panel 200. The space between the front panel 200 and the rear panel 304 houses the energy storage device. In an embodiment, the front panel 200 and the rear panel 304 may enclose a head pipe of the vehicle. A main pipe may extend from the head pipe to form the frame structure of the vehicle till a rear side of the vehicle. The head pipe receives a steering column of a steering system of the vehicle. The rear panel 304 can receive an instrument cluster on its top and is proximal to a seat of the vehicle. The energy storage device may be accommodated in a storage enclosure 301. The storage enclosure 301 is disposed in a space between the front panel 200 and the rear panel 304. At least one control unit 302, 303 is also positioned in the space between the front panel 200 and the rear panel 304. The rear panel 304 has an opening feature 305 to accommodate a steering lock assembly. As exemplarily illustrated, one of the control units 303 is mounted to an inner surface 304a of the rear panel 304. The control units are a first control unit 302 and a second control unit 303 in close proximity to the energy storage device.

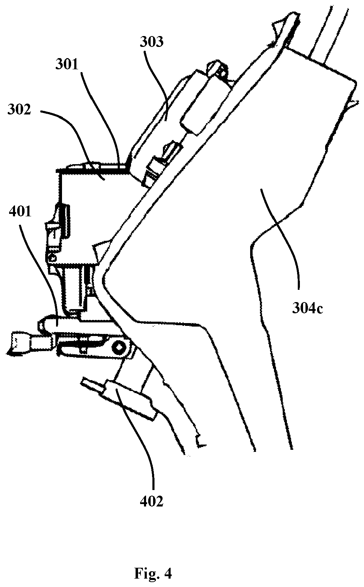

Fig. 4 exemplarily illustrates a left side view of the rear panel 304 of the smart vehicle. As exemplarily illustrated, the second control unit 303 is mounted on a forward facing section 304c of the inner surface 304a of the rear panel 304. The second control unit 303 is leftwards of the storage enclosure 301. The storage enclosure 301 is positioned towards the front of the vehicle and supported by a bracket 401 extending from the head pipe 402. The bracket 401 may support the first control unit 302 along with the storage enclosure 301. The second control unit 303 can be seen to be in close proximity of the storage enclosure 301. The headlamp assembly 201 (not shown in this illustration) disposed on the front panel 200 is positioned substantially forwardly to the storage enclosure 301.

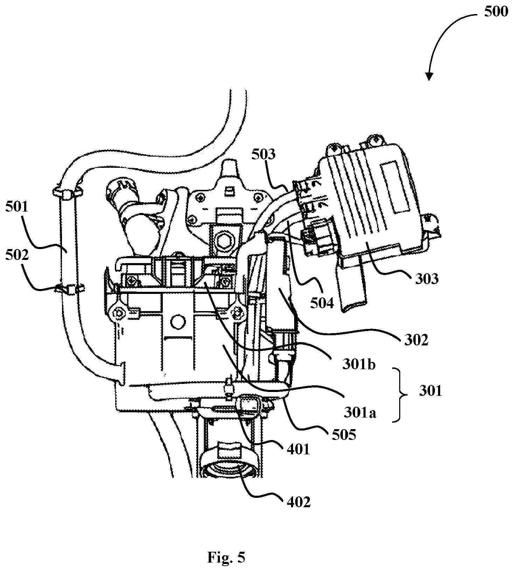

Fig. 5 exemplarily illustrates a front perspective view of an assembly 500 of the storage enclosure 301 and the control units 302, 303 as assembled in the vehicle with panel members 200 and 304 omitted for clarity. The storage enclosure 301 is a box structure with a top portion 301b and a bottom portion 301a to enclose the energy storage device. The top portion 301b of the storage enclosure 301 is removably attached to the bottom portion 301a. The storage enclosure 301 is supported on the U-shaped bracket 401 that extends from the head pipe 402. The storage enclosure 301 has provisions to access the terminals of the energy storage device. In an embodiment, the storage enclosure 301 can accommodate one or more energy storage devices. The energy storage devices in the storage enclosure 301 may be connected in series or parallel. The energy storage devices may be rechargeable or replaceable lithium ion batteries, lead acid batteries, Nickel cadmium batteries, Fuel cell stack, etc. The energy storage devices may supply voltage to a motor to drive the vehicle, to control units, such as, 302, 303, to other electric and electronic components, such as, indicators, instrument cluster, and may also get charged from the motor via an ISG unit using a wiring harness, such as, 501. The electrical and electronic loads in the vehicle may be high voltage loads, such as, control units, motors, charging units, etc., and low voltage loads, such as, indicators, switches, and sensors in the vehicle. The wiring harness may be a high voltage wiring harness, such as, 501 connecting the energy storage devices to the high voltage loads and low voltage wiring harness, such as, 504 connecting the low voltage loads. In an embodiment, the thickness of the high voltage wiring harness 501 is greater than the thickness of the low voltage wiring harness 504. Since, the energy storage device is positioned in a front side of the vehicle, the wiring harness 501, 504, both high and low are to be routed along a frame or side panels of the vehicle. To prevent slacking of the wiring harness 501 and to hold it steady, the wiring harness 501 is attached to a frame at one or more predefined locations or to provisions in a side panel of the vehicle using holders, such as, hole clips 502. The wiring harness 501 has a rubber sleeve on it to insulate it from contacting other electrical and electronic components. Connecting wires in the wiring harness 501 with couplers at their ends branch out from the wiring harness 501 to connect to individual electrical and electronic loads.

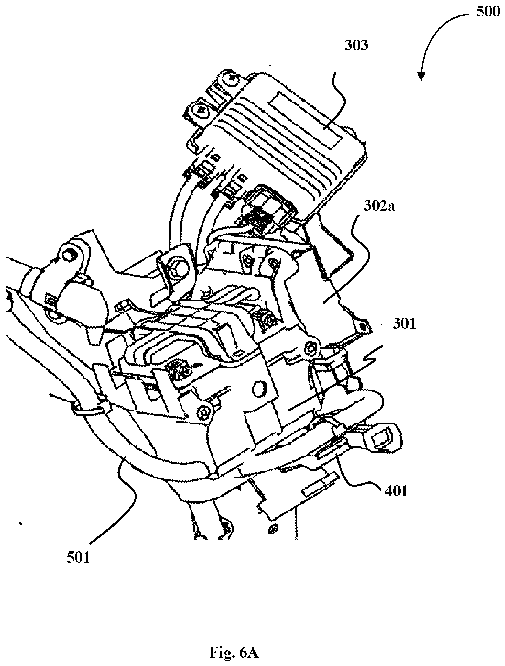

As illustrated, the first control unit 302 is positioned in close proximity of the energy storage device. The first control unit 302 is positioned on the same bracket 401. In an embodiment, the first control unit 302 may be positioned on a separate bracket extending from the head pipe 402. In an embodiment, the first control unit 302 may be removably mounted on to the storage enclosure 301 by means of screw and nut assembly. In an embodiment, the first control unit 302 may be integrated with the storage enclosure 301 as exemplarily illustrated in Figs. 6A-6B. The first control unit 302 is connected to the energy storage device inside the storage enclosure 301 electrically by means of the wiring harness 504. The second control unit 303, disposed to one of the adjacent side of the storage enclosure 301, is electrically connected to the energy storage device inside the storage enclosure 301 using the wiring harness 504. The second control unit 303 is disposed substantially rearward and leftward of the storage enclosure 301. The first control unit 302 and the second control unit 303 are disposed along a same side, that is, the left side or the right side of the storage enclosure 301 in a vehicle width-wise direction. In an embodiment, the first control unit 302 and the second control unit 303 may be disposed on opposite sides of the storage enclosure 301. In an embodiment, the second control unit 303 may be mounted to the storage enclosure 301 and the first control unit 302 may be mounted to the rear panel 304. As per an embodiment, the first control unit 302 is the EMS-ECU and the second control unit 303 is an ISG controller.

Figs. 6A-6B exemplarily illustrate a right-side perspective view and a plan view of the assembly 500 of the storage enclosure 301 and the control units 302, 303, respectively, as assembled on vehicle with any parts omitted for clarity. The first control unit 302 comprises a first mounting enclosure 302a. The first mounting enclosure 302a covers the internal components of the first control unit 302 and forms an external cover of the first control unit 302. The first control mounting enclosure 302a may be used for mounting the first control unit 302 to the storage enclosure 301 as shown in Fig. 5. In an embodiment, as exemplarily illustrated in Fig. 6A, the first control unit 302 is integrated with the storage enclosure 301. In this embodiment, the first mounting enclosure 302a is integrated to the storage enclosure 301. The integrated assembly of the storage enclosure 301 and the first mounting enclosure 302a ensures the energy storage device and the electronic components of the first control unit 301 are within same casing whose top portion 301b and bottom portion 301a are removably attached. In an embodiment, the wiring harness connecting the storage enclosure 301 with the first control unit 302 is eliminated. In an embodiment, the first mounting enclosure 302a is grounded.

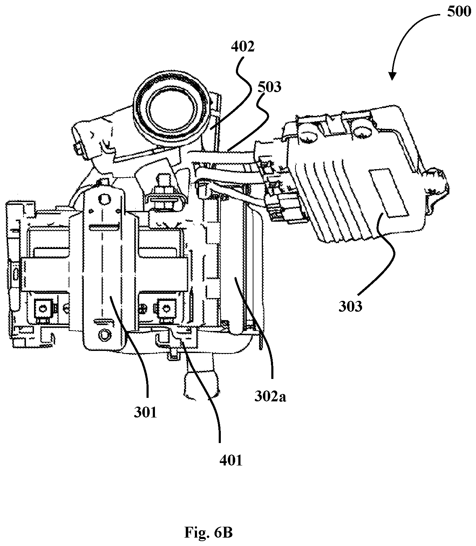

The storage enclosure 301 is disposed substantially laterally centrally along a vehicle longitudinal direction and the first control unit 302 and the second control unit 303 are positioned on the same lateral side of the vehicle longitudinal direction. As per an embodiment, the storage enclosure 301 and the first control unit 302 are mounted on the bracket 401 and the bracket 401 is removably attached to the head pipe 402 of the vehicle as shown in Fig. 6B.

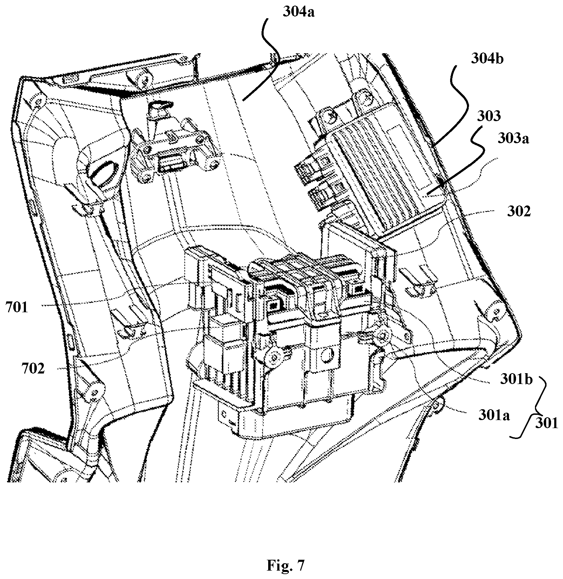

Fig. 7 exemplarily illustrates a left side perspective view of the assembly of the storage enclosure 301 and the control units 302, 303. The storage enclosure 301 comprises mounting provisions for a relay unit 702 and a protection device 701, such as, a fuse. The relay unit 702 and the protection device 701 are mounted on same lateral side of the storage enclosure 301. In an embodiment, the relay unit 702 and the protection device 701 are mounted on opposite sides or adjacent sides of the storage enclosure 301. The relay unit 702 and the protection device 701 are removably attached to the storage enclosure 301 and electrically connected to the energy storage device. The relay unit 702 isolates the energy storage device from the high voltage electrical loads and the low voltage electrical loads. The protection device 701, such as, the fuse protects the terminals of the energy storage device from short circuit. In an embodiment, the relay unit 702 and the protection device 701 are mounted on the support bracket 401 of the storage enclosure 301 and externally electrically connected to the energy storage device in the storage enclosure 301.

As per an embodiment, the first control unit, e.g. the EMS-ECU 302 is seen to be a flat thin rectangular structure mounted on the supporting bracket 401. As per an embodiment, the height of the first control unit 302 when assembled in the vehicle is greater than the height of the storage enclosure 301 when seen from a side view. The storage enclosure 301 is cuboidal in structure. In case of integration of the storage enclosure 301 with the first mounting enclosure 302a, the common enclosure will encapsulate a short heighted energy storage device and a tall heighted PCB with electronic components of the first control unit 302. The first mounting enclosure 302a of the first control unit 302 is made of an insulating material, such as, a polymer or rubber and resists any conduction or short circuit during contact with the storage enclosure 301.

As per an embodiment, the second control unit, e.g. the ISG controller 303, is a flat thin rectangular structure mounted onto the inner surface 304a of the rear panel 304 closer to the lateral edges 304b of the rear panel 304. In an embodiment, the second mounting enclosure 303a may be integrated to the rear panel 304. The second control unit 303 comprises a second mounting enclosure 303a that encapsulates the electronic components of the second control unit 303 and facilitates mounting of the second control unit 303 onto the rear panel 304. The second mounting enclosure 303a has access to the input pins and output pins of the components of the second control unit 303 that allows electrical connection of the second control unit 303 to the first control unit 302, the energy storage device in the storage enclosure 301, the ISG unit, and the other components in the vehicle. The second mounting enclosure 303a is made of an EMI shielding material, such as, Aluminium with heat dissipating fins. As per an embodiment, the first control unit 302 is oriented with its large surface area of the first mounting enclosure 302a being substantially facing one of a left or right side of the vehicle. As per another embodiment, the first mounting enclosure 302a of the first control unit 302 is also configured with cooling fins on the external surface.

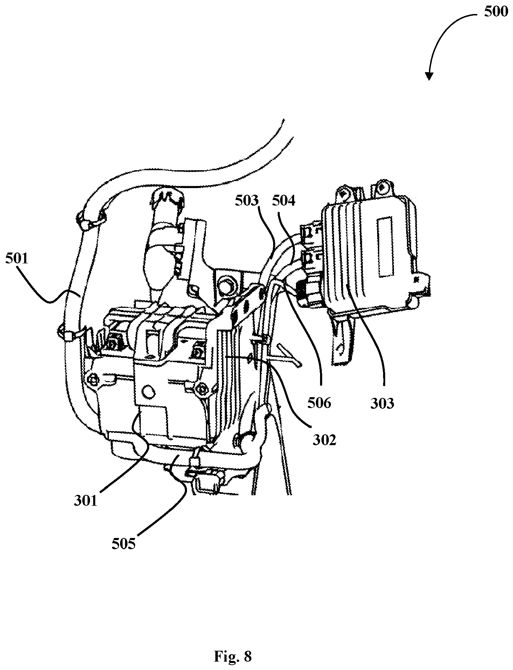

Fig. 8 exemplarily illustrates a perspective view of the assembly 500 of the storage enclosure 301 and the control units 302,303 with routing of the wiring harness 501, 503, 504, 505, 506. The first control unit, e.g. the EMS-ECU 301 is connected to multiple switches and multiple sensors, such as, vehicle speed sensor, throttle position sensor, etc., and receives power supply from the energy storage device, and cranking status of the engine from the second control unit, e.g. the ISG controller 302. If not integrated to the storage enclosure 301, the first control unit 302 is connected externally to the energy storage device in the storage enclosure 301 via a high voltage wiring harness 505. As exemplarily illustrated, the first control unit 302 is integrated to the storage enclosure 301 and thus, the energy storage device and the EMS-ECU 302 are internally connected. The EMS-ECU 302 and the ISG controller 303 are also connected using a shorter length of a high voltage wiring harness 505. The connection of the EMS-ECU 302 with other components of the vehicle, such as, sensors, is also through the high voltage wiring harness 505 running along the frame of the vehicle.

The second control unit, e.g. the ISG controller 303 controls the operation of the ISG unit of the vehicle. The ISG unit along with the ISG controller 303 constitutes the starting system of the vehicle. The ISG controller 303 receives inputs from multiple switches and controls the operation of the ISG unit. The ISG controller 303 is connected to the ISG unit by means of a high voltage wiring harness 503. The ISG controller 303 is also connected to the energy storage device of the storage enclosure 301 to draw power using the high voltage wiring harness 504. The high voltage wiring harness 503 is routed from behind and underneath the storage enclosure 301 and towards one of the right side and left side of the vehicle along the frame of the vehicle to the rear side of the vehicle. As per another aspect of the present invention, the ISG unit is disposed on either of the left lateral side or the right lateral side of the vehicle i.e. the ISG unit is either on the same side as the ISG controller or on the opposite side. As per another embodiment, the smart vehicle may be configured with only one controller 302, 303 wherein the single controller is capable of performing more than one control functions i.e. EFI, ISG, ECS, BMS, etc. As per another embodiment, the single or combined controller may be disposed at the location of first control unit 302 or the position of the second control unit 303 described earlier.

In an embodiment, the EMS-ECU 302 may control the operation of the headlamp assembly 201. In another embodiment, the ISG controller 303 controls the operation of the headlamp assembly 201 based on preconfigured conditions. The drivers of the headlamp assembly 201 are driven by the EMS-ECU 302 or the ISG controller 303 to turn ON, turn OFF, dim, or change orientation to a desired direction. In an embodiment, the LED drivers of the headlamp assembly 201 may be integrated within the EMS-ECU 302 or the ISG controller 303. The LEDs in the headlamp assembly 201 may receive constant supply of current from the ISG controller 303. For this function, the ISG controller 303 may be connected by a low voltage wiring harness (not shown) with the headlamp assembly 301 in the front panel 200 of the smart vehicle.

In the space between the front panel 200 and the rear panel 304, the control units 302, 303 for the starting system and the engine control system are provided. The energy storage device or devices in the storage enclosure 301 may support the components of the starting system and the engine control system alone. One or more energy storage devices may be disposed laterally centrally at the front side of the vehicle or in the rear side of the vehicle to supply power to other components in the vehicle, to eliminate long running high voltage and low voltage wires in the vehicle. The control units 302, 303 are positioned in proximity to the power unit, such as, the engine of the vehicle and other components of the starting system and the engine control system, requiring lesser lengths of the wiring harness.

The embodiments of the assembly of the control units and the storage enclosure in the smart vehicle provide a technical advancement in the field of smart vehicles as follows: The space between the front panel and the rear panel is effectively, safely, and securely configured to house the energy storage device and the control units. The control units positioned in the space are not limited to the EMS-ECU and the ISG controller. The control units may be a telematics control unit, a braking control unit, an interface unit for interfacing the signals from the different controls units of the vehicle, etc. At least one energy storage device is enclosed in the storage enclosure and is protected from water ingress, dust ingress, vibration, etc. Also, the guided assembly of the top portion and the bottom portion of the storage enclosure facilitates simple, clean, and non-cumbersome assembly of the storage enclosure. Further, mounting of the storage enclosure on the support bracket connected to the head pipe is strong and rigid and simple to perform thereby enabling ease of dismantling, service, and diagnostics of the smart vehicle. The same support bracket may support the first control unit, avoiding other mountings and installations for the first control unit. The first mounting enclosure of the first control unit may be integrated with the storage enclosure, saving material and space in manufacturing and assembly of the storage enclosure and the first control unit. Similarly, the relay unit and the protection device are mounted onto the supporting enclosure, avoiding extraneous installation means and wire routing means, keeping the assembly of the relay unit and the protection device simple and less cumbersome. The storage enclosure with the relay unit and the protection device is modular, facilitating installation of such storage enclosure with the energy storage device within in an existing layout with less laborious manufacturing process. The ISG controller and the EMS-ECU inevitably interact with each other and thus are connected by a shorter length of wiring harness. The shorter length of wiring harness reduces the voltage drop along the length of the wiring harness. Also, the integration of the storage enclosure with the first mounting enclosure reduces the number of components on the bracket as well as the cost of manufacturing additional mounting enclosure for the first control unit.

Further, the second control unit, the ISG controller is removably attached to the rear panel. The EMS-ECU and the ISG controller are placed away from the engine and with ample frontal air cooling thereby eliminating performance problems owing to excess heat from the power train as well as enhancing heat dissipation of the controllers during their operation. The storage enclosure, the EMS-ECU, and the ISG controller are cooled by air passing through the vents of the front panel and the control units are better cooled and the operating temperature is maintained at a low level. The wire length between the EMS-ECU and the energy storage device is less and results in accurate measurement of the battery voltage by the EMS-ECU, thereby achieving an improved and reliable layout configuration of the smart vehicle. The access to the control units and the energy storage device is simpler and does not require removal of multitude of body panels for assembly, manufacturing, and servicing of the control units and the energy storage device. Serviceability of the assembly of the control units and the energy storage device in the rear panel is improved. The high voltage wiring from the ISG controller to the ISG machine can be routed from the rear side of the storage enclosure which ensures that there is no interference with the storage enclosure or the EMS-ECU.

The present configuration helps in eliminating a separate driver for the LED headlamp as the ISG controller that is mounted on the rear panel, is positioned behind the LED headlamp and can provide constant current to the LED headlamp, thereby performing the additional function of the LED headlamp driver. The present configuration helps in minimizing the power losses that occur due to wiring harness. The longer distance between the ISG controller and the battery increases the drop in voltage from the ISG controller to the battery terminal, which leads to slower rate of charging of the battery. Further, the longer the wiring harness, the larger the power losses. If ISG controller is placed far-off from the battery, the voltage at the ISG controller end has to be increased for increasing the rate of charging of the battery. However, such an increase in the voltage at the ISG controller end leads to degradation of life of the other electrical parts in the vehicle. On the contrary, the present invention addresses the above problem by configuring a layout wherein the ISG controller is disposed nearer to the battery. Also, the EMI noise between the ISG controller and the EMS-ECU is avoided by the first mounting enclosure and the second mounting enclosure.

Improvements and modifications may be incorporated herein without deviating from the scope of the invention as defined in the appended claims.

### LIST OF REFERENCE NUMERALS

100-conventional vehicle
101-EMS-ECU in conventional vehicle
102-frame
103-seat rail
104- battery
105- wiring harness
200- front panel
200a, 200b, 200c, 200d- sub-panels
201-headlamp assembly
202a,202b- turn signal indicators
203-visor
204-mounting provision for registration plate
205a, 205b-vents
301-storage enclosure
301a-bottom portion
301b-top portion
302- first control unit/EMS-ECU
302a- first mounting enclosure
303- second control unit/ISG controller
303a- second mounting enclosure
304- rear panel
304a- inner surface of the rear panel
304b- edges of the rear panel
304c- forward facing section of the inner surface 304a
305- feature for steering locking assembly
401- mounting bracket
402- head pipe
501, 503, 504, 505, 506- wiring harness
502- hole clip
701- protection device
702- relay unit

## Claims

1. A smart vehicle comprising:
a front panel (200);
a rear panel (304) proximal to a seat of the smart vehicle;
a storage enclosure (301) configured for accommodating at least one energy storage device, the storage enclosure (301) being disposed in a space between the front panel (200) and the rear panel (304); and
at least one control unit (302, 303), which is positioned in the space between the front panel (200) and the rear panel (304), wherein the at least one control unit (302, 303) is mounted to the rear panel (304).

2. The smart vehicle as claimed in claim 1, wherein a head pipe (402) is enclosed in the space between the front panel (200) and the rear panel (304) and wherein the storage enclosure (301) is positioned in front of the head pipe (402), and
wherein the storage enclosure (301) comprises provisions for mounting at least one relay unit (702) and at least one protection device (701) on at least one side of the storage enclosure (301).

3. The smart vehicle as claimed in claim 1, wherein the at least one control unit (302, 303) comprises a first control unit (302) and a second control unit (303),
wherein the first control unit (302) is mounted to the storage enclosure (301), and
wherein the second control unit (303) is mounted to an inner surface of the rear panel (304).

4. The smart vehicle as claimed in claim 3,
wherein the second control unit (303) is disposed substantially rearward and leftward of the storage enclosure (301), and
wherein the storage enclosure (301) is disposed substantially laterally centrally along a vehicle longitudinal direction.

5. The smart vehicle as claimed in claim 3, wherein the first control unit (302) and the second control unit (303) being disposed along one of a left side and a right side of the storage enclosure (301) in a vehicle width-wise direction.

6. The smart vehicle as claimed in claim 3, wherein the smart vehicle comprises a headlamp assembly (201) disposed on the front panel (200) substantially forwardly to the storage enclosure (301),
wherein the headlamp assembly (201) includes one or more LED light sources capable of receiving constant supply of current from one of the first control unit (302) and the second control unit (303).

7. The smart vehicle as claimed in claim 3, wherein the first control unit (302) is an EMS-ECU and the second control unit (303) is an ISG controller.

8. The smart vehicle as claimed in claim 3, wherein the second control unit (303) is connected to an ISG unit by means of at least one high voltage wiring harness (504) routed behind and underneath the storage enclosure (301) towards one of the right side and the left side of the smart vehicle along a frame of the smart vehicle to the rear side of the smart vehicle,
wherein the ISG unit is disposed on one of a same side as the second control unit (303) and on an opposite side to the second control unit (303).

9. The smart vehicle as claimed in claim 3, wherein the first control unit (302) is oriented with a large surface area being substantially facing one of the left side and the right side of the smart vehicle.

10. The smart vehicle as claimed in claim 1,
wherein the at least one control unit (302, 303) comprises a mounting enclosure (302a, 303a) for mounting the at least one control unit (302, 303) to one of the storage enclosure (301) and the rear panel (304), and
wherein the mounting enclosure (302a, 303a) forms an external cover of the at least one control unit (302, 303) and comprises a plurality of cooling fins for cooling of internal components of the at least one control unit (302, 303).

11. The smart vehicle as claimed in claim 10, comprising a first mounting enclosure (302a)integrated to the storage enclosure (301) and a second mounting enclosure (303a) integrated with the rear panel (304), wherein the first and second mounting enclosures (302a, 303a) are grounded.

12. The smart vehicle as claimed in claim 1, wherein the front panel (200) includes one or more air vents (205a, 205b) disposed in a width-wise direction facing a front side of the smart vehicle for allowing passage of atmospheric air for cooling of the at least control unit (302, 303).

13. The smart vehicle as claimed in claim 1, comprising a power unit disposed substantially towards a rear side of the smart vehicle, andcomprising a utility box disposed substantially above the power unit.

14. The smart vehicle as claimed in claim 1, wherein the front panel (200) includes one or more sub-panels (200a, 200b, 200c, 200d), which can be detached for accessing one of the storage enclosure (301) and the at least one control unit (302, 303).

15. A smart vehicle comprising:
a head pipe (402),
a storage enclosure (301), which is capable of accommodating at least one energy storage device, the storage enclosure (301) being disposed in front of the head pipe (402);
a vehicle body panel comprising a front panel (200) and a rear panel (304),
wherein the storage enclosure (301) is disposed between the front panel (200) and the rear panel (304), and an integrated engine and generator controller (303) is mounted to the rear panel (304).

## Patentansprüche

1. Intelligentes Fahrzeug mit
einer Fronttafel (200);
einer Rückwand (304) in der Nähe eines Sitzes des intelligenten Fahrzeugs;
ein Speichergehäuse (301), das zum Aufnehmen zumindest einer Energiespeichervorrichtung eingerichtet ist, wobei das Speichergehäuse (301) in einem Raum zwischen der Fronttafel (200) und der Rückplatte (304) angeordnet ist; und
zumindest eine Steuereinheit (302, 303), die in dem Raum zwischen der Fronttafel (200) und der Rückplatte (304) positioniert ist, wobei die zumindest eine Steuereinheit (302, 303) an der Rückplatte (304) angebracht ist.

2. Intelligentes Fahrzeug nach Anspruch 1, wobei ein Lenkrohr (402) in dem Raum zwischen der Fronttafel (200) und der Rückplatte (304) einbezogen ist und wobei das Speichergehäuse (301) vor dem Lenkrohr (402) positioniert ist, und
wobei das Speichergehäuse (301) Vorkehrungen für die Montage zumindest einer Relaiseinheit (702) und zumindest einer Schutzvorrichtung (701) auf zumindest einer Seite des Speichergehäuses (301) aufweist.

3. Intelligentes Fahrzeug nach Anspruch 1, wobei die zumindest eine Steuereinheit (302, 303) eine erste Steuereinheit (302) und eine zweite Steuereinheit (303) aufweist,
wobei die erste Steuereinheit (302) an dem Speichergehäuse (301) angebracht ist, und
wobei die zweite Steuereinheit (303) an einer Innenfläche der Rückwand (304) angebracht ist.

4. Intelligentes Fahrzeug nach Anspruch 3,
wobei die zweite Steuereinheit (303) im Wesentlichen hinter und links von dem Speichergehäuse (301) angeordnet ist, und
wobei das Speichergehäuse (301) im Wesentlichen seitlich mittig entlang einer Fahrzeuglängsrichtung angeordnet ist.

5. Intelligentes Fahrzeug nach Anspruch 3, wobei die erste Steuereinheit (302) und die zweite Steuereinheit (303) entlang einer linken Seite oder einer rechten Seite des Speichergehäuses (301) in einer Richtung der Fahrzeugbreite angeordnet sind.

6. Intelligentes Fahrzeug nach Anspruch 3, wobei das intelligente Fahrzeug eine an der Fronttafel (200) im Wesentlichen vorderhalb des Speichergehäuses (301) angeordnete Scheinwerferanordnung (201) aufweist,
wobei die Scheinwerferanordnung (201) eine oder mehrere LED-Lichtquellen beinhaltet, die fähig sind, eine konstante Stromzufuhr von der ersten Steuereinheit (302) oder der zweiten Steuereinheit (303) zu erhalten.

7. Intelligentes Fahrzeug nach Anspruch 3, wobei die erste Steuereinheit (302) eine EMS-ECU ist und die zweite Steuereinheit (303) eine ISG-Steuerung ist.

8. Intelligentes Fahrzeug nach Anspruch 3, wobei die zweite Steuereinheit (303) mit einer ISG-Einheit mittels zumindest eines Hochspannungskabelbaums (504) verbunden ist, der hinter und unterhalb des Speichergehäuses (301) zu der rechten oder linken Seite des intelligenten Fahrzeugs hin entlang eines Rahmens des intelligenten Fahrzeugs zur Rückseite des intelligenten Fahrzeugs geführt ist,
wobei die ISG-Einheit auf derselben Seite wie die zweite Steuereinheit (303) oder auf einer der zweiten Steuereinheit (303) gegenüberliegenden Seite befindlich ist.

9. Intelligentes Fahrzeug nach Anspruch 3, wobei die erste Steuereinheit (302) mit einem großen Oberflächenbereich ausgerichtet ist, der im Wesentlichen der linken oder der rechten Seite des intelligenten Fahrzeugs zugewandt ist.

10. Intelligentes Fahrzeug nach Anspruch 1,
wobei die zumindest eine Steuereinheit (302, 303) ein Montagegehäuse (302a, 303a) zur Montage der zumindest einen Steuereinheit (302, 303) an dem Speichergehäuse (301) oder der Rückwand (304) aufweist, und
wobei das Montagegehäuse (302a, 303a) eine äußere Abdeckung der zumindest einen Steuereinheit (302, 303) bildet und eine Vielzahl von Kühlrippen zur Kühlung interner Komponenten der zumindest einen Steuereinheit (302, 303) aufweist.

11. Intelligentes Fahrzeug nach Anspruch 10, aufweisend ein erstes Montagegehäuse (302a), das in das Speichergehäuse (301) integriert ist, und ein zweites Montagegehäuse (303a), das in die Rückwand (304) integriert ist, wobei das erste und das zweite Montagegehäuse (302a, 303a) geerdet sind.

12. Intelligentes Fahrzeug nach Anspruch 1, wobei die Fronttafel (200) eine oder mehrere Lüftungsöffnungen (205a, 205b) beinhaltet, die in einer Richtung entlang der Breite angeordnet sind, einer Vorderseite des intelligenten Fahrzeugs zugewandt, um den Durchgang von atmosphärischer Luft zur Kühlung der zumindest einen Steuereinheit (302, 303) zu ermöglichen.

13. Intelligentes Fahrzeug nach Anspruch 1, mit einer Antriebseinheit, die im Wesentlichen zu einer Rückseite des intelligenten Fahrzeugs hin angeordnet ist, und mit einem Zubehörfach, das im Wesentlichen oberhalb der Antriebseinheit angeordnet ist.

14. Intelligentes Fahrzeug nach Anspruch 1, wobei die Fronttafel (200) eine oder mehrere Teiltafeln (200a, 200b, 200c, 200d) umfasst, die für den Zugriff auf das Speichergehäuse (301) oder die zumindest eine Steuereinheit (302, 303) abnehmbar sind.

15. Intelligentes Fahrzeug mit
einem Lenkrohr (402),
einem Speichergehäuse (301), das zum Aufnehmen zumindest einer Energiespeichervorrichtung fähig ist, wobei das Speichergehäuse (301) vor dem Lenkrohr (402) angeordnet ist;
ein Fahrzeugkarosserieteil, das eine Fronttafel (200) und eine Rückwand (304) umfasst, wobei das Speichergehäuse (301) zwischen der Fronttafel (200) und der Rückwand (304) angeordnet ist und eine integrierte Motor- und Generatorsteuerung (303) an der Rückwand (304) angebracht ist.

## Revendications

1. Véhicule intelligent comprenant
un panneau avant (200) ;
un panneau arrière (304) proche d'un siège du véhicule intelligent ;
une enceinte de stockage (301) configurée pour accueillir au moins un dispositif de stockage d'énergie, l'enceinte de stockage (301) étant disposée dans un espace situé entre le panneau avant (200) et le panneau arrière (304) ; et
au moins une unité de commande (302, 303), positionnée dans l'espace entre le panneau avant (200) et le panneau arrière (304), au moins une unité de commande (302, 303) étant montée sur le panneau arrière (304).

2. Véhicule intelligent selon la revendication 1, dans lequel un tuyau de tête (402) est enfermé dans l'espace entre le panneau avant (200) et le panneau arrière (304) et dans lequel l'enceinte de stockage (301) est positionnée devant le tuyau de tête (402),
l'enceinte de stockage (301) comportant des dispositions pour le montage d'au moins une unité de relais (702) et d'au moins un dispositif de protection (701) sur au moins un côté de l'enceinte de stockage (301).

3. Véhicule intelligent selon la revendication 1, dans lequel ladite au moins une unité de commande (302, 303) comporte une première unité de commande (302) et une deuxième unité de commande (303),
la première unité de commande (302) étant montée sur l'enceinte de stockage (301), et
la deuxième unité de commande (303) étant montée sur une surface intérieure du panneau arrière (304).

4. Véhicule intelligent selon la revendication 3,
dans lequel la deuxième unité de commande (303) est disposée sensiblement à l'arrière et à gauche de l'enceinte de stockage (301), et
dans lequel l'enceinte de stockage (301) est disposée sensiblement au centre latéralement le long de la direction longitudinale du véhicule.

5. Véhicule intelligent selon la revendication 3, dans lequel la première unité de commande (302) et la deuxième unité de commande (303) sont disposées le long d'un du côté gauche et du côté droit de l'enceinte de stockage (301) dans le sens de la largeur du véhicule.

6. Véhicule intelligent selon la revendication 3, dans lequel le véhicule intelligent comporte un ensemble de phares (201) disposé sur le panneau avant (200) sensiblement à l'avant de l'enceinte de stockage (301),
ledit ensemble de phares (201) comportant une ou plusieurs sources lumineuses LED capables de recevoir une alimentation constante en courant de l'une de la première unité de commande (302) et de la deuxième unité de commande (303).

7. Véhicule intelligent selon la revendication 3, dans lequel la première unité de commande (302) est une EMS-ECU et la deuxième unité de commande (303) est un contrôleur ISG.

8. Véhicule intelligent selon la revendication 3, dans lequel la deuxième unité de commande (303) est connectée à une unité ISG au moyen d'au moins un faisceau de câblage haute tension (504) acheminé derrière et sous l'enceinte de stockage (301) vers l'un du côté droit et du côté gauche du véhicule intelligent le long d'un châssis du véhicule intelligent jusqu'au côté arrière du véhicule intelligent,
l'unité ISG étant disposée à l'un du même côté que la deuxième unité de commande (303) et du côté opposé à la deuxième unité de commande (303).

9. Véhicule intelligent selon la revendication 3, dans lequel la première unité de commande (302) est orientée avec une grande surface faisant face à l'un du côté gauche et du côté droit du véhicule intelligent.

10. Véhicule intelligent selon la revendication 1,
dans lequel ladite au moins une unité de commande (302, 303) comprend un boîtier de montage (302a, 303a) pour monter ladite au moins une unité de commande (302, 303) sur l'une de l'enceinte de stockage (301) et le panneau arrière (304), et
dans lequel le boîtier de montage (302a, 303a) forme un couvercle externe de ladite au moins une unité de commande (302, 303) et comporte une pluralité d'ailettes de refroidissement pour refroidir des composants internes de ladite au moins une unité de commande (302, 303).

11. Véhicule intelligent selon la revendication 10, comportant un premier boîtier de montage (302a) intégré à l'enceinte de stockage (301) et un deuxième boîtier de montage (303a) intégré au panneau arrière (304), le premier et le deuxième boîtiers de montage (302a, 303a) étant mis à la terre.

12. Véhicule intelligent selon la revendication 1, dans lequel le panneau avant (200) comprend un ou plusieurs évents (205a, 205b) disposés dans le sens de la largeur face à un côté avant du véhicule intelligent pour permettre le passage de l'air atmosphérique pour le refroidissement d'au moins l'unité de commande (302, 303).

13. Véhicule intelligent selon la revendication 1, comportant une unité de puissance disposée sensiblement vers un côté arrière du véhicule intelligent, et comportant une boîte utilitaire disposée sensiblement au-dessus de l'unité de puissance.

14. Véhicule intelligent selon la revendication 1, dans lequel le panneau avant (200) comprend un ou plusieurs sous-panneaux (200a, 200b, 200c, 200d), qui peuvent être détachés pour accéder à l'enceinte de stockage (301) et à ladite au moins une unité de commande (302, 303).

15. Véhicule intelligent comprenant
un tuyau de tête (402),
une enceinte de stockage (301) pouvant accueillir au moins un dispositif de stockage d'énergie, l'enceinte de stockage (301) étant disposée à l'avant du tuyau d'échappement (402) ;
un panneau de carrosserie du véhicule comprenant un panneau avant (200) et un panneau arrière (304),
l'enceinte de stockage (301) étant disposée entre le panneau avant (200) et le panneau arrière (304), et un contrôleur intégré de moteur et de générateur (303) étant monté sur le panneau arrière (304).
